# EUROPÄISCHE PATENTSCHRIFT

(11) **EP 0 760 560 B1**
(45) Veröffentlichungstag und Bekanntmachung des Hinweises auf die Patenterteilung: **11.05.2005**
(21) Anmeldenummer: 96113650.4
(22) Anmeldetag: 26.08.1996
(51) Int. Cl.: H04B 1/16, H04B 1/04, H04B 1/38, G04G 7/02

(54) **Funkeinrichtung, bestehend aus einer Mobilfunkeinheit und einer Funkuhr**
Radio unit comprising a mobile transceiver and a radio controlled clock
Dispositif radio comprenant un radioémetteur-récepteur mobile et une montre controlée par radio

(30) Priorität: 29.08.1995 DE 19531759
(43) Veröffentlichungstag der Anmeldung: 05.03.1997
(73) Patentinhaber: SIEMENS AKTIENGESELLSCHAFT, 80333 München (DE)
(72) Erfinder: Hofmann, Jürgen, Dipl.-Ing. (FH), 85304 Ilmmünster (DE)

(56) Entgegenhaltungen:
- EP-A- 0 329 901
- US-A- 4 607 257
- US-A- 4 860 005

## Beschreibung

Die Erfindung betrifft eine Funkeinrichtung, bestehend aus einer Mobilfunkeinheit mit einer Verarbeitungseinrichtung und einer Funkuhr und geht aus von der US-A-4'860'005.

Bekanntlich werden Funkeinrichtungen zum drahtlosen Senden und Empfangen von Signalen über Funkübertragungsstrecken verwendet. Dabei werden Sprachsignale, Datensignale und/oder Nachrichtensignale vorzugsweise digital über die Luftschnittstelle übertragen. Die Funkeinrichtungen sind in der Regel batteriebetrieben, was bei ständiger Funkfeldbeobachtung während der Betriebsbereitschaft einen erheblichen Energieaufwand bedeutet. Der Energieaufwand spielt aber bei manchen Systemen eine wichtige Rolle, so beispielsweise bei Wasser-Meßsystemen, die ohne Stromanschluß auskommen müssen. Das System liefert nur zu bestimmten Zeiten ein Signal, muß aber dennoch ständig mit Energie in Form großer Batterien versorgt werden. Selbst bei Verwendung alternativer Möglichkeiten der Energiezufuhr für ein System, beispielsweise über Solarzellen oder ein Stromnetz, bleibt das Problem des ungünstigen Energieverbrauchs durch Stromaufnahme im eingeschalteten, aber nicht benutzten Zustand.

Aus der Druckschrift US 4,860,005 ist eine reine Empfangsvorrichtung, insbesondere ein so genannter Pager, welche zeitabhängig Signale über die Luft empfängt, bekannt. Ein Senden und Empfangen wird in dieser Druckschrift jedoch nicht erwähnt.

Die Druckschrift US 4,607,257 betrifft ein Fern-Kalibrierungssystem für Satellitenzeit. Dabei weist eine Kalibrierungsstation eine Referenzzeit und eine entfernt gelegene Station eine lokale Zeit auf. Die lokale Zeit der entfernt gelegenen Station soll mit der Referenzzeit abgestimmt werden. Dazu werden Telemetrie-Signale zwischen den beiden Stationen über eine Satellitenverbindung ausgetauscht. Abhängig von den Zeitdifferenzen wird die lokale Zeit sodann in der entfernt gelegenen Station kalibriert.

Es ist Aufgabe der vorliegenden Erfindung, eine Funkeinrichtung zu schaffen, durch die bei Anwendung in einem energieaufnehmenden System der Energieverbrauch im Mittel reduziert werden kann.

Diese Aufgabe wird gemäß der Erfindung durch die Merkmale des Patentanspruchs 1 gelöst.

Weiterbildungen der Erfindung sind in den Unteransprüchen angegeben.

Dadurch, daß die Funkeinrichtung mit einer Funkuhr und mit einer Mobilfunkeinheit ausgestattet ist, die von der Funkuhr ein Wecksignal empfängt, werden Signale über die Luft jeweils für eine begrenzte Zeitdauer vorübergehend empfangen. Somit ist die Empfangsbereitschaft der Funkeinrichtung auf bestimmte Zeiten beschränkt, was im Mittel zu einer Reduzierung des Energieverbrauchs des Systems, in dem die Funkeinrichtung verwendet wird, führt. Das System kann durch die zeitweise abgeschaltete Funkeinrichtung nämlich nur zu festgelegten Zeiten Signale aus der Luft empfangen. Dabei ist der Stromverbrauch der Funkuhr gegenüber dem Stromverbrauch der Mobilfunkeinheit vernachlässigbar.

Gemäß einer Weiterbildung der Erfindung werden von der Mobilfunkeinheit zu der Funkuhr Zeitsignale übertragen, aus denen die Funkuhr jeweils den Zeitpunkt zum Aussenden des Wecksignals ableitet. Von Vorteil ist es, wenn die Zeitsignale festlegen, zu welcher Uhrzeit oder nach welcher abgelaufenen Zeitdauer das Wecksignal ausgesendet wird.

Gemäß einer anderen Weiterbildung der Erfindung wird das Wecksignal von der Funkuhr jeweils zu festen Zeitpunkten ausgesendet.

Die Erfindung wird anhand eines in Figuren dargestellten Ausführungsbeispiels näher erläutert. Im einzelnen zeigen
- Figur 1: das Blockschaltbild einer ersten Ausführungsform der Funkeinrichtung gemäß der Erfindung und
- Figur 2: das Blockschaltbild einer zweiten Ausführungsform der Funkeinrichtung gemäß der Erfindung.

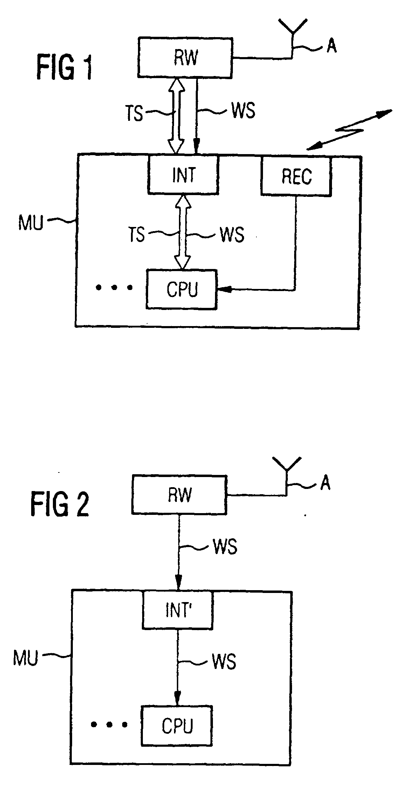

Figur 1 zeigt eine Funkeinrichtung mit einer Mobilfunkeinheit MU und einer Funkuhr RW. Die Funkuhr RW verfügt über eine eigene Antenne A zum Empfang von Signalen, die über die Luftschnittstelle auf Funkübertragungswegen gesendet werden. Die Mobilfunkeinheit MU besteht aus Einrichtungen, die mit Ausnahme einer Tastatur und eines Anzeigefeldes in einer gewöhnlichen Funkteilnehmerstation vorgesehen sind. Eine derartige Funkteilnehmerstation ist beispielsweise eine Mobilstation, die als Teilnehmerendgerät in einem nach dem GSM-Standard (Global System for Mobile Communication) betriebenen digitalen Mobilfunknetz eingesetzt wird. Somit eignet sich die Mobilfunkeinheit MU der Funkeinrichtung wie eine gewöhnliche Funkteilnehmerstation zum Senden und Empfangen von durch die Luft übertragenen Signalen.

Eine der Einrichtungen in der Mobilfunkeinheit MU ist die Verarbeitungseinrichtung CPU, von der die anderen Einrichtungen der Mobilfunkeinheit MU gesteuert und Signale verarbeitet werden. Die Verarbeitungseinrichtung CPU ist in der Mobilfunkeinheit MU mit einer Schnittstelle INT verbunden, über die der Anschluß der Mobilfunkeinheit MU mit der Funkuhr RW zur gegenseitigen Signalübertragung möglich ist. Darüber hinaus ist in der Mobilfunkeinheit MU eine Fernsteuerungseinrichtung REC vorgesehen, durch die die Mobilfunkeinheit MU durch Fernsteuersignale von außen aktiviert oder deaktiviert werden kann. Die Fernsteuersignale werden in der Luft übertragen und von entsprechenden Bauelementen der Fernsteuerungseinrichtung REC empfangen.

Die aus der Mobilfunkeinheit MU und der Funkuhr RW bestehende Funkeinrichtung ermöglicht den Empfang von Signalen nur zu bestimmten Zeiten, in denen die Mobilfunkeinheit durch ein von der Funkuhr angelegtes Wecksignal WS eingeschaltet ist. Durch Verwendung der Funkeinrichtung in einem energieaufnehmenden System kann der durchschnittliche Energieverbrauch des Systems reduziert werden. Dabei ist der Stromverbrauch der Funkuhr RW im Vergleich zum Stromverbrauch der Mobilfunkeinheit MU vernachlässigbar. Ein energieaufnehmendes System mit einer vergleichsweise hohen Energieversorgung ist ein Wasser-Meßsystem ohne Stromanschluß, das Meßsignale auf Meeren, Seen oder Flüssen liefert. Durch die mit dem Meßsystem verbundene Funkeinrichtung werden die Signale für eine begrenzte Zeitdauer und zu festgelegten Zeitpunkten, in denen die Mobilfunkeinheit MU von der Funkuhr RW aktiviert wurde, vom Meßsystem über die Funkeinrichtung abgesetzt bzw. entgegengenommen.

Das vorübergehende Empfangen für die begrenzte Zeitdauer wird durch das Wecksignal WS bewirkt, das von der Funkuhr RW an die Mobilfunkeinheit MU angelegt wird. Das Wecksignal WS gelangt in der Mobilfunkeinheit MU über die Schnittstelle INT zur Verarbeitungseinrichtung CPU, die die Mobilfunkeinheit MU für die festgelegte Zeitdauer in eine Sende- und Empfangsbereitschaft schaltet. Das Wecksignal WS wird von der Funkuhr RW aus Zeitsignalen TS abgeleitet, die zuvor von der Verarbeitungseinrichtung CPU - ebenfalls über die Schnittstelle INT - zur Funkuhr RW ausgesendet wurden. Dabei enthalten die Zeitsignale TS entweder direkt die Uhrzeit zum Aussenden des Wecksignals WS oder Zeitparameter, durch die festgelegt wird, nach welcher abgelaufenen Zeitdauer jeweils das Wecksignal WS von der Funkuhr RW zur Mobilfunkeinheit MU abzugeben ist. Die Zeitsignale TS und das Wecksignal WS werden als Steuersignale eines Steuerbusses, der zwischen der Funkuhr RW und der Schnittstelle INT verläuft, übertragen. Bei dem seriell oder parallel ausgebildeten Steuerbus handelt es sich entweder um einen synchronen Steuerbus oder um einen asynchronen Steuerbus.

Durch die aus der Funkuhr RW und der Mobilfunkeinheit MU bestehende Funkeinrichtung braucht das Meßsystem zur Energieversorgung nicht mehr mit großen Batterien, die wegen der kurzen Bereitschaftszeit häufig gewechselt werden müssen, ausgestattet zu werden. Auch der Nachteil der oftmaligen Wartung des Systems entfällt durch die erfindungsgemäße Funkeinrichtung. Eine weitere Anwendung der erfindungsgemäßen Funkeinrichtung besteht darin, Container, die in einem Hafen verladen werden müssen, jeweils mit der Funkeinrichtung auszustatten, um aus der Vielzahl von Containern die verlorenen Container auffinden zu können. Bei vorübergehend aktivierter Empfangsbereitschaft der Funkeinrichtung an den Containern können Signale zu festgelegten Zeitpunkten empfangen werden. Darüber hinaus besteht die Möglichkeit, daß die Mobilfunkeinheit MU Signale auch in die Luft aussendet. In diesem Fall wird zuvor eine drahtlose Verbindung zu einer Basisstation aufgebaut, um die Signalübertragung über die Luftschnittstelle ausführen zu können. Für den Empfang der Signale durch die Funkuhr genügt es, das Funkfeld während der begrenzten Zeitdauer zu beobachten.

Figur 2 zeigt eine alternative Ausführungsform der Funkeinrichtung gemäß der Erfindung, bestehend aus der Funkuhr RW und der Mobilfunkeinheit MU. Dabei wird das Wecksignal WS von der Funkuhr RW selbst erzeugt und in festen Zeitintervallen an die Mobilfunkeinheit MU angelegt. Eine in der Mobilfunkeinheit MU vorgesehene Schnittstelle INT' empfängt das Wecksignal WS und leitet es zur Verarbeitungseinrichtung CPU weiter. Die Verarbeitungseinrichtung CPU überprüft und aktualisiert auf Grund des eintreffenden Wecksignals WS die Zeitgeber (timer) und schaltet sich nach Ablauf der festgelegten Zeitdauer wieder in den Ruhezustand. Das Wecksignal WS wird vorzugsweise auf einen Steuersignaleingang (Interrupt-Eingang) der Verarbeitungseinrichtung CPU geführt, an dem die Verarbeitungseinrichtung CPU während des üblichen Betriebs unterbrochen werden kann. Die Funkeinrichtung ist entweder als Einzelmodul ausgebildet, in dem die Funkuhr RW und die Mobilfunkeinheit MU integriert sind, oder aus einer Mobilfunkeinheit MU und einer Funkuhr RW aufgebaut, die als voneinander getrennte Module aufzufassen sind.

## Patentansprüche

1. Funkeinrichtung, welche Signale über die Luft vorübergehend empfängt, **dadurch gekennzeichnet,**
**dass** die Funkeinrichtung aus einer Mobilfunkeinheit (MU), welche geeignet ist, Signale zu Senden und zu Empfangen, mit einer Verarbeitungseinrichtung (CPU), und einer Funkuhr (RW) besteht, von der an die Mobilfunkeinheit (MU) ein Wecksignal (WS) angelegt wird, durch das jeweils für eine begrenzte Zeitdauer die Signale über die Luft vorübergehend empfangen werden.

2. Funkeinrichtung nach Anspruch 1,
**dadurch gekennzeichnet,**
**daß** von der Verarbeitungseinrichtung (CPU) der Mobilfunkeinheit (MU) Zeitsignale (TS) zu der Funkuhr (RW) übertragen werden, aus denen jeweils der Zeitpunkt zum Aussenden des Wecksignals (WS) durch die Funkuhr (RW) abgeleitet wird.

3. Funkeinrichtung nach Anspruch 2,
**dadurch gekennzeichnet,**
**daß** durch das Zeitsignal (TS) jeweils eine Uhrzeit zum Aussenden des Wecksignals (WS) festgelegt wird.

4. Funkeinrichtung nach Anspruch 2,
**dadurch gekennzeichnet,**
**daß** durch das Zeitsignal (TS) festgelegt wird, nach welcher abgelaufenen Zeitdauer jeweils das Wecksignal (WS) ausgesendet wird.

5. Funkeinrichtung nach Anspruch 1,
**dadurch gekennzeichnet,**
**daß** das Wecksignal (WS) von der Funkuhr (RW) jeweils zu festen Zeitpunkten ausgesendet wird.

6. Funkeinrichtung nach Anspruch 5,
**dadurch gekennzeichnet,**
**daß** das von der Funkuhr (RW) erzeugte Wecksignal (WS) auf einen Steuersignaleingang der Verarbeitungseinrichtung (CPU) geführt wird, an dem die Verarbeitungseinrichtung (CPU) während des üblichen Betriebs unterbrochen werden kann.

7. Funkeinrichtung nach einem der vorhergehenden Ansprüche,
**dadurch gekennzeichnet,**
**daß** die Mobilfunkeinheit (MU) eine Schnittstelle (INT, INT') zur Funkuhr (RW) aufweist, über die von der Verarbeitungseinrichtung (CPU) das Wecksignal (WS) empfangen bzw. die Zeitsignale (TS) gesendet werden.

8. Funkeinrichtung nach einem der Ansprüche 1 bis 7,
**dadurch gekennzeichnet,**
**daß** die Funkuhr (RW) mit der Mobilfunkeinheit (MU) in einem einzelnen Modul zusammengefaßt sind.

9. Funkeinrichtung nach einem der Ansprüche 1 bis 7,
**dadurch gekennzeichnet,**
**daß** die Mobilfunkeinheit (MU) und die Funkuhr (RW) als getrennte Module ausgebildet sind.

## Claims

1. Radio unit which temporarily receives signals over the air
**characterised in that**
the radio unit comprises a mobile transceiver (MU) suitable for sending and receiving signals and having a processing unit (CPU) and a radio-controlled clock (RW) by which a wake-up signal (WS) is applied to the mobile transceiver (MU) as a result of which wake-up signal the signals are temporarily received over the air for a limited length of time in each case.

2. Radio unit according to claim 1,
**characterised in that**
time signals (TS) from which the instant in time for the transmission of the wake-up signal (WS) by the radio-controlled clock (RW) is derived are transmitted from the processing unit (CPU) of the mobile transceiver (MU) to the radio-controlled clock (RW) in each case.

3. Radio unit according to claim 2,
**characterised in that**
a time of day for transmitting the wake-up signal (WS) is in each case determined by the time signal (TS).

4. Radio unit according to claim 2,
**characterised in that**
it is specified by the time signal (TS) after what expired length of time the wake-up signal (WS) is sent in each case.

5. Radio unit according to claim 1,
**characterised in that**
the wake-up signal (WS) is in each case sent by the radio-controlled clock (RW) at fixed instants in time.

6. Radio unit according to claim 5,
**characterised in that**
the wake-up signal (WS) generated by the radio-controlled clock (RW) is routed to a control signal input of the processing unit (CPU) at which input the processing unit (CPU) can be interrupted during normal operation.

7. Radio unit according to one of the preceding claims,
**characterised in that**
the mobile transceiver (MU) has an interface (INT, INT') to the radio-controlled clock (RW) over which interface the wake-up signal (WS) is received or, as the case may be, the time signals are sent by the processing unit (CPU).

8. Radio unit according to one of the claims 1 to 7,
**characterised in that**
the radio-controlled clock (RW) and the mobile transceiver (MU) are combined in a single module.

9. Radio unit according to one of the claims 1 to 7,
**characterised in that**
the mobile transceiver (MU) and the radio-controlled clock (RW) are embodied as separate modules.

## Revendications

1. Dispositif radio recevant provisoirement des signaux par voie aérienne,
**caractérisé en ce que**
le dispositif radio est formé d'une unité de radiotéléphonie mobile (MU) adaptée pour émettre et recevoir des signaux, avec un dispositif de traitement (CPU) et une horloge radio-pilotée (RW) qui applique à l'unité de radiotéléphonie mobile (MU) un signal de réveil (WS) grâce auquel les signaux sont provisoirement reçus par voie aérienne à chaque fois pour une durée limitée.

2. Dispositif radio selon la revendication 1,
**caractérisé en ce que**
des signaux temporels (TS) sont transmis à l'horloge radio-pilotée (RW) par le dispositif de traitement (CPU) de l'unité de radiotéléphonie mobile (MU), signaux dont est déduit à chaque fois le moment d'émission du signal de réveil (WS) par l'horloge radio-pilotée (RW).

3. Dispositif radio selon la revendication 2,
**caractérisé en ce que**
le signal temporel (TS) fixe à chaque fois une heure pour l'émission du signal de réveil (WS).

4. Dispositif radio selon la revendication 2,
**caractérisé en ce que**
le signal temporel (TS) fixe après quelle durée écoulée le signal de réveil (WS) est à chaque fois envoyé.

5. Dispositif radio selon la revendication 1,
**caractérisé en ce que**
le signal de réveil (WS) est émis par l'horloge radio-pilotée (RW) à des instants fixes à chaque fois.

6. Dispositif radio selon la revendication 5,
**caractérisé en ce que**
le signal de réveil (WS) produit par l'horloge radio-pilotée (RW) est transmis à une entrée de signaux de commande du dispositif de traitement (CPU) au niveau de laquelle le dispositif de traitement (CPU) peut être interrompu pendant le fonctionnement habituel.

7. Dispositif radio selon l'une des revendications précédentes,
**caractérisé en ce que**
l'unité de radiotéléphonie mobile (MU) comprend une interface (INT, INT') vers l'horloge radio-pilotée (RW), par le biais de laquelle le signal de réveil (WS) est reçu resp. les signaux temporels (TS) sont émis par le dispositif de traitement (CPU).

8. Dispositif radio selon l'une des revendications 1 à 7,
**caractérisé en ce que**
l'horloge radio-pilotée (RW) est réunie dans un module unique avec l'unité de radiotéléphonie mobile (MU).

9. Dispositif radio selon l'une des revendications 1 à 7,
**caractérisé en ce que**
l'unité de radiotéléphonie mobile (MU) et l'horloge radio-pilotée (RW) sont exécutées en tant que modules séparés.
